(19) Europäisches Patentamt
European Patent Office
Office européen des brevets

(11) EP 4 790 099 A1

(12) # EUROPEAN PATENT APPLICATION
published in accordance with Art. 153(4) EPC

(43) Date of publication:
**12.08.2026 Bulletin 2026/33**

(21) Application number: **25867318.5**

(22) Date of filing: **15.07.2025**

(51) International Patent Classification (IPC):
***C08L 77/00*** *(2006.01)* ***C08L 71/12*** *(2006.01)*

(52) Cooperative Patent Classification (CPC):
**C08K 3/04; C08L 23/0807; C08L 53/02; C08L 71/12; C08L 77/00**

(86) International application number:
**PCT/KR2025/010322**

(87) International publication number:
**WO 2026/111088 (28.05.2026 Gazette 2026/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.11.2024 KR 20240169426**

(71) Applicant: **LG Chem, Ltd.**
**Yeongdeungpo-gu**
**Seoul 07336 (KR)**

(72) Inventors:
- **CHOI, Gi Dae**
  **Seoul 07796 (KR)**
- **PARK, Jieun**
  **Seoul 07796 (KR)**
- **LIM, Mok Keun**
  **Seoul 07796 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CONDUCTIVE RESIN COMPOSITION, METHOD FOR PREPARING SAME, AND MOLDED PRODUCT COMPRISING SAME**

(57) The present disclosure provides a conductive resin composition comprising a continuous phase containing polyamide, a micro-dispersed phase containing polyphenylene ether, and a first nano-dispersed phase positioned in the micro-dispersed phase and containing a styrene copolymer, wherein the micro-dispersed phase has a diameter of 2 μm or less and the first nano-dispersed phase has a diameter of 300 nm or less.

【FIG. 2】

Continuous phase
First nano-dispersed phase
Micro-dispersed phase
Second nano-dispersed phase
1μm



Processed by Luminess, 75001 PARIS (FR)

## Description

[Technical Field]

The present disclosure relates to a conductive resin composition, a method for preparing the same, and a molded article including the same. Specifically, it relates to a conductive resin composition having excellent impact resistance and surface quality, a method for preparing the same and a molded article.

The present application claims the benefit of Korean Patent Application No. 10-2024-0169426 filed on November 25, 2024, in the Korean Intellectual Property Office, the entire disclosure of which is incorporated herein by reference.

[Background Art]

Recently, as demand for fuel efficiency improvement and weight reduction has increased in the automobile industry, research has been actively conducted to convert materials for automobile exterior parts from metal to resin. Particularly, a blend resin containing polyphenylene ether (PPE) mixed with polyamide (PA) has been frequently used for automobile exterior parts, and this is intended to realize excellent properties by combining advantages of the two materials. Polyphenylene ether has excellent heat resistance and impact resistance and polyamide has excellent solvent resistance, and thus high quality can be expected by blending the two materials. However, since polyphenylene ether and polyamide show low compatibility with each other, a blend resin thereof cannot realize heat resistance and impact resistance sufficiently.

Automobile exterior parts generally require coating, and particularly, electrostatic coating is used frequently. This is advantageous in terms of the environment and is a method that can ensure reduction of total volatile organic compounds (TVOCs) and appearance quality. Although research has been conducted about imparting conductivity by adding a conductive material such as carbon fibers, carbon black, etc. to a blend resin in order to carry out electrostatic coating effectively, addition of such a conductive material causes side effects, including degradation of appearance quality or reduction of impact resistance. The blend resin has a limitation in heat resistance, or shows a problem in appearance, such as generation of pinholes in manufacturing a molded article, and may cause problems, such as degradation of dimensional stability and mechanical properties due to moisture.

Therefore, there is a need for developing a conductive resin composition provided with conductivity and resistance against external environment while maintaining excellent appearance quality and mechanical properties. Additionally, there is a need for developing a material, which can minimize degradation of performance caused by exposure to the external environment, such as moisture and heat, and can contribute to improvement of eco-friendly feature of automobile industry and fuel efficiency, through the development of such a conductive resin composition.

[**Disclosure**]

[Technical Problem]

The present disclosure is directed to providing a conductive resin composition having excellent appearance quality and impact resistance, a method for preparing the same and a molded article including the same.

The problems of the present disclosure are not limited to the above-mentioned problems, and other technical problems not mentioned may be clearly understood by those skilled in the art.

[Technical Solution]

An exemplary embodiment of the present disclosure provides a conductive resin composition including a continuous phase containing polyamide, a micro-dispersed phase containing polyphenylene ether, and a first nano-dispersed phase positioned in the micro-dispersed phase and containing a styrene copolymer, wherein the micro-dispersed phase has a diameter of 2 μm or less and the first nano-dispersed phase has a diameter of 300 nm or less.

The conductive resin composition may further include a second nano-dispersed phase separated from the micro-dispersed phase and containing carbon nanotubes.

The second nano-dispersed phase may have a diameter of 250 nm or less.

The micro-dispersed phase may further include a modified polyphenylene ether different from the polyphenylene ether, wherein the ratio of the weight of the polyphenylene ether and the weight of the modified polyphenylene ether may be 95:5 to 60:40.

The polyamide may have a relative viscosity (RV) of 1 to 5.

The conductive resin composition may further include an olefin copolymer.

The carbon nanotubes may be concentrated in the olefin copolymer.

The ratio of the weight of the olefin copolymer and the weight of the carbon nanotubes may be 50:50 to 95:5.

The conductive resin composition may further include carbon nanotubes, modified polyphenylene ether and an olefin copolymer, wherein, based on 100 parts by weight of the combined weight of the polyamide, the polyphenylene ether and the modified polyphenylene ether, the styrene copolymer may be contained in an amount of 5 parts by weight to 12 parts by weight, the olefin copolymer may be contained in an amount of 2 parts by weight to 6 parts by weight and the carbon nanotubes may be contained in an amount of 0.5 parts by weight to 3 parts by weight.

An exemplary embodiment of the present disclosure provides a molded article including the above-described conductive resin composition.

The molded article may have a heat distortion temperature of 185°C or higher and a volume resistance of less than $10^5$ Ω·cm.

An exemplary embodiment of the present disclosure provides a method for preparing a conductive resin composition, including the steps of: preparing a masterbatch containing carbon nanotubes concentrated in an olefin copolymer; mixing a mixture of polyamide, polyphenylene ether, a styrene copolymer and the masterbatch; and melting and kneading the mixture by using a twin screw extruder.

The twin screw extruder may include 8 or more kneading blocks.

[Advantageous Effects]

A conductive resin composition according to an exemplary embodiment of the present disclosure has a dual dispersion structure including a nano-dispersed phase in a micro-dispersed phase, and thus shows excellent impact resistance.

In addition, a conductive resin composition according to an exemplary embodiment of the present disclosure has an excellent surface appearance.

The advantageous effects of the exemplary embodiments of the present disclosure are not limited to those described above, and more diverse effects are included in the present specification.

[Brief Description of Drawings]

FIG. 1 is a schematic view illustrating an extruder for preparing a conductive resin composition according to an exemplary embodiment of the present disclosure.

FIG. 2 shows the conductive resin composition of Example 1 according to an exemplary embodiment of the present disclosure, as observed by transmission electron microscopy (TEM).

[Best Mode]

Hereinafter, the present disclosure will be explained in more detail.

Throughout the present specification, when a part is described to "include" a component, this does not exclude the presence of another component but rather implies that further components may be included, unless the context specifically states otherwise.

Unless otherwise stated specifically in the present specification, the terminology is intended only to refer to specific embodiments and is not intended to limit the present disclosure.

Singular forms used in the present specification also include plural forms unless the phrases clearly indicate the opposite meaning.

In the present specification, "p to q" means a range of p or more and q or less.

When measurement conditions and methods are not specifically described with respect to the physical properties described in the present specification, the physical properties are measured according to measurement conditions and methods generally used by those skilled in the art.

In the present specification, unless otherwise specified, measurement of physical properties is carried out at room temperature under ambient pressure.

In the present disclosure, "room temperature" is a natural temperature free from warming or cooling, and means, for example, any one temperature within a range of about 10°C to about 30°C, for example, about 15°C, about 18°C, about 20°C, about 23°C, or about 25°C. In addition, the unit of temperature is °C, unless otherwise specified in the present disclosure.

In the present disclosure, "ambient pressure" is a natural pressure free from pressurization and decompression, and about 1 atm (about 700 mmHg to 800 mmHg) is generally referred to as ambient pressure.

Hereinafter, a conductive resin composition according to an exemplary embodiment of the present disclosure

and a molded article including the same will be described in detail.

An electrostatic coating method according to the related art includes adding conductive carbon or carbon fibrils to polyamide, but such conductive carbon or carbon fibrils have limited dispersibility, resulting in significantly low impact strength. Therefore, there was a difficulty in applying such an electrostatic coating method to metal-substituting electrostatic coating.

The conductive resin composition according to an exemplary embodiment of the present disclosure includes a styrene copolymer in an alloy resin containing polyamide mixed with polyphenylene ether and has a dual dispersion structure, and thus shows excellent impact resistance. In addition, the conductive resin composition according to an exemplary embodiment of the present disclosure includes carbon nanotubes concentrated in an olefin copolymer, and thus shows excellent stability in high-temperature electrostatic coating and has excellent surface appearance quality.

An exemplary embodiment of the present disclosure provides a conductive resin composition including a continuous phase containing polyamide, a micro-dispersed phase containing polyphenylene ether, and a first nano-dispersed phase positioned in the micro-dispersed phase and containing a styrene copolymer, wherein the micro-dispersed phase has a diameter of 2 μm or less and the first nano-dispersed phase has a diameter of 300 nm or less.

The conductive resin composition according to an exemplary embodiment of the present disclosure includes a sea and island structure having a continuous phase (sea) and a dispersed phase (island). Polyamide may form a continuous phase, polyphenylene ether may form a micro-dispersed phase in the continuous phase, and a styrene copolymer may form a first nano-dispersed phase in the micro-dispersed phase. Such a dual dispersion form can increase impact resistance.

Herein, polyamide may be one prepared by a method used currently in the art or may be commercially available without departing from the scope of the present disclosure, and is not particularly limited.

For example, polyamide may be at least one selected from the group consisting of polyamide resin 6, polyamide resin 66, polyamide resin 46, polyamide resin 11, polyamide resin 12, polyamide resin 610, polyamide resin 612, polyamide resin 6/66, polyamide resin 6/612, polyamide resin MXD6, polyamide resin 6/MXD6, polyamide resin 66/MXD6, polyamide resin 6T, polyamide resin 6I, polyamide resin 6/6T, polyamide resin 6/6I, polyamide resin 66/6T, polyamide resin 66/6I, polyamide resin 6/6T/6I, polyamide resin 66/6T/6I, polyamide resin 9T, polyamide resin 9I, polyamide resin 6/9T, polyamide resin 6/9I, polyamide resin 66/9T, polyamide resin 6/12/9T, polyamide resin 66/12/9T, polyamide resin 6/12/9I and polyamide resin 66/12/6I, more preferably, may be a homopolymer or copolymer containing at least one selected from polyamide resin 6, polyamide resin 66, polyamide resin 46, polyamide resin 11 and polyamide resin 12, and most preferably, may include polyamide resin 66, and this case provides an effect of excellent heat resistance and molding processability.

According to an exemplary embodiment of the present disclosure, polyamide may have a relative viscosity (RV) of 1 to 5, preferably 1 to 3. Within the above-defined range, polyphenylene ether, styrene copolymer and carbon nanotubes may be dispersed to form a dispersed phase having a suitable size. Unless otherwise stated, the relative viscosity is measured in a 1.0 wt/vol% solution of a polyamide sample in 96 wt% sulfuric acid according to the method of ASTM D789. Specifically, a solution prepared by dissolving 1 g of polyamide in 100 ml of 96 wt% aqueous sulfuric acid solution may be used to measure the relative viscosity at 25°C with UFIT-UVS instrument, or a capillary viscometer such as Ubbelohde viscometer or Ostwald viscometer.

According to an exemplary embodiment of the present disclosure, the micro-dispersed phase containing polyphenylene ether may have a diameter of 0.5 μm to 2 μm, preferably 1 μm to 1.9 μm, and more preferably 1.2 μm to 1.8 μm. Within the above-defined range, excellent dispersibility can be realized, resulting in excellent surface appearance quality.

The diameter of a dispersed phase means the largest value of the distances between two points where a straight line passing through the center of gravity of the dispersed phase meets the outermost boundary of the dispersed phase. When the dispersed phase is circular, the diameter may be an actual diameter, and when the dispersed phase is not circular, the diameter may be the largest width. When there are several dispersed phases, the average value of the diameters may be the diameter of the dispersed phase. The diameter of a dispersed phase may be measured by a method known to those skilled in the art. Specific examples of the method are not particularly limited, but the diameter may be confirmed through, for example, a transmission electron microscopic (TEM) image or a scanning electron microscopic (SEM) image.

Polyphenylene ether (PPE) may form a micro-dispersed phase. Polyphenylene ether (PPE) may also be referred to as polyphenylene oxide (PPO), may be one prepared by a method used currently in the art or may be commercially available without departing from the scope of the present disclosure, and is not particularly limited.

Particular examples of polyphenylene ether may include at least one selected from the group consisting of poly(2,6-dimethyl-1,4-phenylene)ether, poly(2,6-diethyl-1,4-phenylene) ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, poly(2,3,6-trimethyl-1,4-phenylene)ether, poly(2,3,6-triethyl-1,4-phenylene)ether and copolymers thereof, preferably poly(2,6-dimethyl-1,4-phenylene) or a copolymer thereof. Poly-

phenylene ether may be commercially available.

In an exemplary embodiment of the present disclosure, the micro-dispersed phase further includes a modified polyphenylene ether (modified polyphenylene oxide) (mPPO)), besides the above-mentioned polyphenylene ether (polyphenylene oxide). Polyphenylene ether (polyphenylene oxide) and the modified polyphenylene ether (modified polyphenylene oxide (mPPO)) are different from each other.

The modified polyphenylene oxide is a form prepared by modifying the structure of the above-mentioned polyphenylene ether (polyphenylene oxide) and is a form in which a functional group is added to the end or side chain of the polymer chain. The modified polyphenylene oxide has improved physical properties or chemical properties and shows reinforced processability, impact resistance, or the like, as compared to polyphenylene oxide. The modified polyphenylene oxide may be obtained by blending polyphenylene oxide with polystyrene (PS), polyamide (PA), or the like. The modified polyphenylene oxide may be commercially available.

In an exemplary embodiment of the present disclosure, the weight of the polyphenylene ether is larger than that of the modified polyphenylene ether. For example, the ratio of the weight of the polyphenylene ether and the weight of the modified polyphenylene ether is 95:5 to 60:40, preferably 90:10 to 70:30, and more preferably 85:15 to 75:25. Within the above-defined range, it is possible to realize the processability of modified polyphenylene ether while exhibiting the heat resistance and dimensional stability of polyphenylene ether.

In an exemplary embodiment of the present disclosure, the ratio of the weight of the polyphenylene ether and modified polyphenylene ether and the weight of the polyamide is 20:80 to 60:40, preferably 40:60 to 60:40, and more preferably 45:55 to 50:50. Within the above-defined range, it is possible to increase the compatibility of polyphenylene ether with polyamide by forming the micro-dispersed phase homogeneously.

The above-described polyamide, polyphenylene ether and modified polyphenylene ether may form a base resin.

The styrene copolymer may form a first nano-dispersed phase. The first nano-dispersed phase may be formed in the above-described micro-dispersed phase.

In an exemplary embodiment of the present disclosure, the first nano-dispersed phase may have a diameter of 50 nm to 300 nm, preferably 100 nm to 250 nm, more preferably 120 nm to 240 nm, and even more preferably 150 nm to 230 nm. Within the above-defined range, a stable nano-dispersed phase can be formed in the micro-dispersed phase and impact resistance can be improved.

The styrene copolymer may function as an impact-reinforcing agent in the conductive resin composition. Particular examples of the styrene copolymer may include at least one selected from the group consisting of styrene-butadiene-styrene copolymer (SBS), styrene-ethylene-butylene-styrene copolymer (SEBS), styrene-butadiene copolymer (SB), styrene-isoprene copolymer (SI), styrene-isoprene-styrene copolymer (SIS), alphamethyl styrene-butadiene copolymer, styrene-ethylene-propylene copolymer, styrene-ethylene-propylene-styrene copolymer, styrene-(ethylene-butylene/styrene copolymer)-styrene copolymer and modified polymers thereof, preferably at least one selected from the group consisting of styrene-butadiene-styrene copolymer (SBS), styrene-ethylene-butylene-styrene copolymer (SEBS) and maleic anhydride-modified styrene-ethylene-butylene-styrene copolymer, and more preferably styrene-butadiene-styrene copolymer (SBS), and this case provides an effect of excellent mechanical properties, such as impact strength, and excellent conductivity.

In an exemplary embodiment of the present disclosure, the styrene copolymer may have a content of aromatic vinyl compound-derived structural units of 20 wt% to 40 wt%, preferably 25 wt% to 35 wt%, based on 100 wt% of the styrene copolymer. Within the above-defined range, there is an effect of excellent physical properties.

In an exemplary embodiment of the present disclosure, the styrene copolymer may have a content of rubber components of 60 wt% to 80 wt%, preferably 65 wt% to 75 wt%, based on 100 wt% of the styrene copolymer. Within the above-defined range, there is an effect of excellent physical properties.

In an exemplary embodiment of the present disclosure, the styrene copolymer is contained in an amount of 2 parts by weight to 20 parts by weight, preferably 3 parts by weight to 15 parts by weight, and more preferably 5 parts by weight to 12 parts by weight, based on 100 parts by weight of the combined weight of the polyamide, polyphenylene ether and the modified polyphenylene ether. Within the above-defined range, a stable nano-dispersed phase can be formed in the micro-dispersed phase and impact resistance can be improved.

In an exemplary embodiment of the present disclosure, the conductive resin composition further includes a second nano-dispersed phase separated from the micro-dispersed phase and containing carbon nanotubes, and the second nano-dispersed phase is formed in the continuous phase of polyamide. Carbon nanotubes impart conductivity to the composition and forms a second nano-dispersed phase in the continuous phase of polyamide. The second nano-dispersed phase is separated not only from the micro-dispersed phase but also from the first nano-dispersed phase.

If necessary, carbon nanotubes may be surface-modified to increase compatibility with the olefin copolymer described hereinafter and to reinforce conductivity and strength.

In an exemplary embodiment of the present disclosure, the second nano-dispersed phase has a diameter of 250 nm or less. For example, the second nano-dispersed phase has a diameter of 20 nm to 250 nm, preferably 50 nm to 220 nm, and more preferably 80 nm to 200 nm. Within the above-defined range, it is possible to realize the conductivity and

mechanical strength characteristics of carbon nanotubes without detracting from the properties of polyamide.

In an exemplary embodiment of the present disclosure, the diameter of the second nano-dispersed phase is smaller than that of the first nano-dispersed phase.

In an exemplary embodiment of the present disclosure, the carbon nanotubes may have a BET surface area of 180 $m^2/g$ to 600 $m^2/g$, preferably 180 $m^2/g$ to 400 $m^2/g$, more preferably 180 $m^2/g$ to 300 $m^2/g$, and even more preferably 200 to 300 $m^2/g$. Within the above-defined range, there is a significant effect of improving processability and conductivity.

Herein, BET surface area may be determined by the nitrogen adsorption method, specifically by the BET 6-point method according to the nitrogen gas adsorption method using a porosimetry analyzer (Belsorp-II mini, Bell Japan Inc.) In other examples, BET surface area may be determined by the Brunauer, Emmett and Teller method (method according to ASTM 6566).

In an exemplary embodiment of the present disclosure, the carbon nanotubes may be at least one selected from the group consisting of single-walled carbon nanotubes (SWCNTs), double-walled carbon nanotubes (DWCNTs) and multi-walled carbon nanotubes (MWCNTs).

In an exemplary embodiment of the present disclosure, the carbon nanotubes may be those of bundle (rope) type or non-bundle (entangled) type. "Bundle type" and "non-bundle type" are not particularly limited, as long as they are "bundle-type" and "non-bundle type' commonly defined in the technical field to which the present disclosure belongs, respectively.

In an exemplary embodiment of the present disclosure, the carbon nanotubes have an average diameter of 5 nm to 30 nm, preferably 7 nm to 20 nm, and more preferably 10 nm to 15 nm. Within the above-defined range, there is an effect of improving conductivity and appearance quality significantly.

Herein, measurement of the average diameter of the carbon nanotubes is not particularly limited, as long as the average diameter is measured by a method used conventionally in the technical field to which the present disclosure belongs. Specifically, the average diameter may be measured by using electron microscopy.

In an exemplary embodiment of the present disclosure, the carbon nanotubes may be provided as fibrous carbon nanotubes.

In an exemplary embodiment of the present disclosure, the carbon nanotubes are contained in an amount of 0.01 parts by weight to 10 parts by weight, preferably 0.1 parts by weight to 5 parts by weight, more preferably 0.5 parts by weight to 3 parts by weight, and even more preferably 0.8 parts by weight to 2 parts by weight, based on 100 parts by weight of the combined weight of the polyamide, polyphenylene ether and the modified polyphenylene ether. Within the above-defined range, the carbon nanotubes can be dispersed homogeneously so that the composition can exhibit excellent electrical conductivity.

In an exemplary embodiment of the present disclosure, the conductive resin composition further includes an olefin copolymer. The carbon nanotubes and olefin copolymer may be contained in the form of a masterbatch in the conductive resin composition. Specifically, they are added to the composition in the form of a masterbatch including the carbon nanotubes concentrated in the olefin copolymer. For example, the second nano-dispersed phase includes the olefin copolymer.

The olefin copolymer is a carrier polymer of the masterbatch, shows excellent heat stability and chemical resistance and has nonpolar property to provide excellent compatibility with a non-polar additive. Therefore, when the carbon nanotubes are contained in the form of a masterbatch, the conductive resin composition shows excellent surface appearance characteristics.

The olefin copolymer is not particularly limited, as long as it is compatible with the conductive resin composition used for manufacturing final products. Particular examples of the olefin copolymer include polyethylene, polypropylene, polystyrene, polycarbonate, polyester or polyamide, but are not limited thereto.

In an exemplary embodiment of the present disclosure, the ratio of the weight of the olefin copolymer and the weight of the carbon nanotubes is 50:50 to 95:5, preferably 60:40 to 90:10, and more preferably 70:30 to 80:20. Within the above-defined range, it is possible to increase the dispersibility of the carbon nanotubes while ensuring the processability sufficiently, and thus it is possible to increase the electrical conductivity and mechanical strength of the composition.

In an exemplary embodiment of the present disclosure, the olefin copolymer is contained in an amount of 0.5 parts by weight to 20 parts by weight, preferably 1 parts by weight to 10 parts by weight, and more preferably 2 parts by weight to 6 parts by weight, based on 100 parts by weight of the combined weight of the polyamide, polyphenylene ether and the modified polyphenylene ether. Within the above-defined range, the masterbatch has improved processability, and the olefin copolymer and carbon nanotubes show excellent compatibility.

In an exemplary embodiment of the present disclosure, based on 100 parts by weight of the combined weight of the polyamide, polyphenylene ether and the modified polyphenylene ether, the styrene copolymer is contained in an amount of 5 parts by weight to 12 parts by weight, the olefin copolymer is contained in an amount of 2 parts by weight to 6 parts by weight, and the carbon nanotubes are contained in an amount of 0.5 parts by weight to 3 parts by weight.

In an exemplary embodiment of the present disclosure, the conductive resin composition further includes an additive, if necessary. The additive may be at least one selected from an antioxidant, a processing aid, a pigment and a

colorant.

An exemplary embodiment of the present disclosure provides a method for preparing the above-described conductive resin composition.

The conductive resin composition according to an exemplary embodiment of the present disclosure may be prepared by a method known in the art. For example, the conductive resin composition may be prepared by melting and kneading a mixture of each of the components and other additives by using a twin screw extruder.

The method for preparing a conductive resin composition according to an exemplary embodiment of the present disclosure includes the steps of: preparing a masterbatch containing carbon nanotubes concentrated in an olefin copolymer; mixing a mixture of polyamide, polyphenylene ether, a styrene copolymer and the masterbatch; and melting and kneading the mixture by using a twin screw extruder.

The twin screw extruder may include 8 or more, preferably 10 or more kneading blocks, to prepare a composition having a dual dispersion structure by melting and kneading the mixture.

The kneading and extrusion may be carried out at a barrel temperature of 240°C to 310°C, preferably 250°C to 300°C, and more preferably 260°C to 300°C. This is advantageous in that sufficient melting and kneading are allowed while providing a high throughput per unit time, and problems, such as thermal decomposition of resin components, are not caused.

The kneading and extrusion may be carried out under a screw rotation number of 100 rpm to 500 rpm, preferably 150 rpm to 400 rpm, and more preferably 250 rpm to 350 rpm. Within the above-defined range, there are advantages of high throughput per unit time, high processing efficiency and inhibition of excessive cleavage of carbon nanotubes, resulting in excellent conductivity of a final product.

The conductive resin composition obtained through the kneading and extrusion may be provided preferably in the form of pellets. Injection is not particularly limited as long as it is based on methods and conditions used conventionally in the technical field to which the present disclosure belongs, and may be selected and applied suitably as necessary.

Hereinafter, the present disclosure will be explained with reference to the accompanying drawings.

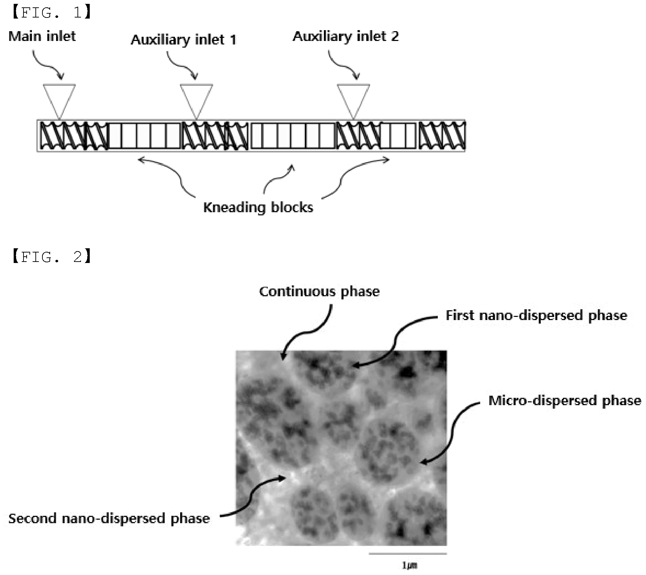

FIG. 1 is a schematic view illustrating an extruder provided with 8 or more kneading blocks for preparing a conductive resin composition according to the present disclosure.

The type of extruder is not particularly limited, and any extruder used conventionally in the art may be selected and used suitably. For example, a single screw extruder provided with one screw or a multiple screw extruder provided with multiple screws may be used, and it is preferred to use a twin screw extruder having two screws, considering homogeneous kneading of materials, easiness of processing, cost efficiency, or the like.

The extruder includes a raw material feeder configured to supply materials into a barrel, a screw configured to transport and knead the materials supplied into the barrel and a die configured to extrude the kneaded materials, and the screw includes a plurality of screw elements to impart various functions.

One or more raw material feeders may be used, and two or more raw material feeders may be used optionally as necessary. For example, a main inlet may be provided optionally with an auxiliary inlet, and two or more auxiliary inlets may be provided.

In a specific example, all components may be introduced to the main inlet at the same time. In another example, the components other than polyamide may be introduced to the main inlet, and polyamide may be introduced to the auxiliary inlet.

The kneading block according to the present disclosure is an example of the screw elements. Specifically, the kneading blocks include a plurality of discs, preferably 3 to 7, 5 to 7, 3 to 5, or 4 to 5 discs, generally has a polygonal or oval cross-section and are arranged continuously in a material conveying direction. In addition, the phase angle of discs (angle of movement between discs) in the kneading blocks is preferably 45° to 90°.

In addition, the kneading blocks include a forward kneading block capable of conveying, distributing and mixing the materials, a neutral kneading block merely capable of distributing and mixing the materials not conveying the materials, a backward kneading block capable of reversely conveying the material in the direction opposite to the conveying direction, or the like.

The conductive resin composition according to the present disclosure may be prepared by a method including a kneading and extruding step using an extruder having 8 or more kneading blocks, preferably 10 or more kneading blocks, more preferably 12 or more kneading blocks, in a preferred example, 9 to 18 kneading blocks, in a more preferred example, 10 to 18 kneading blocks, and in an even more preferred example, 12 to 16 kneading blocks. Herein, the kneading blocks may be used effectively by combining them in order of a forward kneading block, neutral kneading block and a backward kneading block based on the resin flow direction, and continuous or separated block combinations may be used depending on mixing processes. In this case, it is possible to further improve the dispersibility of a conductive filler component, compatibility of the composition, or the like, and thus to provide a high-quality conductive resin composition.

For example, 8 or more kneading blocks may be arranged continuously. In another example, the kneading blocks may be arranged discontinuously between screws. In a specific example, 3 to 6 kneading blocks may be provided continuously between the main inlet and auxiliary inlet 1, 3 to 8 kneading blocks may be provided continuously between

auxiliary inlet 1 and auxiliary inlet 2, and 2 to 5 kneading blocks may be provided between auxiliary inlet 2 and an outlet (not shown). In the case of the above-mentioned arrangement, local heating is controlled during melting and kneading, and thus heat distortion of the raw materials can be prevented. In addition, excessive cleavage of the nano-components is prevented to provide an advantage in that electrical conductivity and mechanical properties are not degraded.

In explaining the conductive resin composition according to the present disclosure, molded article and the method for preparing the same, it is to be noted that other conditions (e.g. constitution or specification of an extruder and injector, extrusion and injection conditions, additives, etc.) that are not specified clearly herein are not particularly limited as long as they fall within ranges currently used in the art and may be selected suitably as necessary.

An exemplary embodiment of the present disclosure provides a molded article including the above-described conductive resin composition. The molded article may be obtained by injecting pellets of the conductive resin composition.

The molded article may be an electrostatically coated automobile exterior part. Particular examples of the electrostatically coated automobile exterior part may include an exterior panel, a door, a fuel inlet, a charging port, or the like.

According to an exemplary embodiment of the present disclosure, the molded article has a tensile strength of 50 MPa to 80 Mpa, preferably 60 MPa to 70 MPa. The tensile strength is determined by the method of ISO 527, wherein a specimen thickness of 4.0 mm, measuring rate of 5 mm/min and a measuring unit of MPa are taken.

According to an exemplary embodiment of the present disclosure, the molded article has an impact strength of 200 J/m or more, preferably 200 J/m to 300 J/m, and more preferably 210 J/m to 250 J/m. The impact strength is Notched Izod impact strength and is measured by the method of ISO 180A, wherein a specimen thickness of 4 mm is taken, the impact strength is measured at room temperature (23°C) after the specimen is notched, and a measuring unit of J/m is taken.

According to an exemplary embodiment of the present disclosure, the molded article has a heat distortion temperature of 185°C or higher, preferably 187°C to 200°C, and more preferably 188°C to 195°C. The heat distortion temperature is measured by the method of ISO 75-2, wherein a specimen thickness of 4 mm is taken, the heat distortion temperature is measured under a stress of 0.45 MPa, and a measuring unit of °C is taken.

According to an exemplary embodiment of the present disclosure, the molded article has a volume resistance of less than $10^5$ $\Omega\cdot$cm, preferably $10^2$ $\Omega\cdot$cm to $10^5$ $\Omega\cdot$cm. The volume resistance is measured by using PRS-801 available from Prostat Corp.

In explaining the conductive resin composition according to the present disclosure and molded article, it is also to be noted that other conditions and equipment not specified clearly herein may be selected suitably without departing from ranges currently used in the art and are not particularly limited.

[Mode for Invention]

Hereinafter, the present disclosure is described in detail through examples. However, the examples according to the present disclosure may be changed into several different forms, and the scope of the present disclosure is not to be interpreted as being limited to the examples described below. The examples of the present specification are provided to describe the present disclosure more fully to those having ordinary knowledge in the art.

**<Preparation Examples>**

Resin compositions are prepared according to Examples and Comparative Examples as shown in the following Table 1. Each component is as follows.

(a-1) U3602 (relative viscosity (RV) at 1% in sulfuric acid, nominal: 2.4) available from Invista was used as a polyamide polymer.
(a-2) LXR-045 available from Bluestar was used as a polyphenylene ether resin.
(a-3) ZA available from G Farm and having a structure of maleic anhydride-modified polyphenylene oxide (mPPO) was used as a modified polyphenylene ether.
(b) SEBS 1651 (styrene content 32 wt%, butadiene rubber content 68 wt%) available from Kraton was used as a styrene copolymer.
(c) POE 670 available from LG Chem. was used as an olefin copolymer.
(d) CP1002M available from LG Chem. was used as carbon nanotubes.

Each component was added at the content as shown in the following Table 1 and the components were melted and kneaded by using a twin screw extruder (T40 available from SM) having 10 mixing blocks and set at a temperature of 260 to 300°C and a rotation number of 300 rpm to prepare a pellet-like composition. A test specimen was molded by using an injector (80 tons, available from Engel) at a temperature of 270°C to 300°C and a mold temperature of 80°C. Whether a

masterbatch form including conductive carbon nanotubes concentrated in an olefin copolymer resin is used or not is also shown in Table 1. When a masterbatch is used, the masterbatch was prepared by using the weight ratio of carbon nanotubes and olefin copolymer as shown in Table 1 and then introduced to the extruder. When a masterbatch is not used, each of the carbon nanotubes and olefin copolymer was introduced separately to the extruder.

FIG. 2 shows the composition of Example 1 as observed by electron transmission microscopy (TEM). As can be seen from FIG. 2, a first nano-dispersed phase is formed in a micro-dispersed phase, and a second nano-dispersed phase is formed in a continuous phase.

**<Test Examples>**

The properties of the specimen prepared as described above was determined by the following methods. The results are shown in Table 1.

1) Tensile strength: Tensile strength was measured by the method of ISO 527, wherein a specimen thickness of 4.0 mm, measuring rate of 5 mm/min and a measuring unit of MPa were taken.
2) Impact strength: Impact strength was measured by the method of ISO 180A as Notched Izod impact strength, wherein a specimen thickness of 4 mm was taken, the impact strength was measured at room temperature (23°C) after the specimen was notched, and a measuring unit of J/m was taken.
3) Heat distortion temperature: Heat distortion temperature was measured by the method of ISO 75-2, wherein a specimen thickness of 4 mm was taken, the heat distortion temperature was measured under a stress of 0.45 MPa, and a measuring unit of °C was taken.
4) Volume resistance: The volume resistance of an injected specimen of a composition was measured by using PRS-801 available from Prostat Corp.
5) Surface appearance quality: A specimen was injected by using 80 ton Engel injector and the appearance of the injected specimen was evaluated.

◎ (Excellent moldability and appearance),
○ (Good moldability and appearance),
△ (Good appearance),
X (Inferior appearance),
XX (Poor appearance)

6) Dispersed phase size: The size of a dispersed phase was measured by using transmission electron microscopy (TEM).

[Table 1]

| | | | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|---|---|
| Composition | Parts by weight | (a-1) Polyamide | 55 | 55 | 50 | 50 | 50 | 50 | 50 | 55 | 50 |
| | | (a-2) Polyphenylene ether | 35 | 35 | 40 | 40 | 42 | 40 | 40 | 40 | 42 |
| | | (a-3) Modified polyphenylene ether | 10 | 10 | 10 | 10 | 8 | 10 | 10 | 5 | 8 |
| | | (b) Styrene copolymer | 10 | 6 | 10 | 10 | 12 | 10 | 15 | 4 | |
| | | (c) Olefin copolymer | 4 | 5 | 3 | 3 | 4 | | 4 | 5 | 7 |
| | | (d) Carbon nanotubes | 1.2 | 1.5 | 1 | 1 | 1.2 | 1.5 | 1.5 | 1.5 | 2 |
| | | Use of concentrated masterbatch | ○ | ○ | ○ | ○ | ○ | X | X | ○ | X |
| Composition | | Diameter of micro-dispersed phase (μm) | 1.5 | 1.2 | 1.5 | 1.6 | 1.8 | 2.9 | 2.5 | 3.1 | 3.5 |
| | | Diameter of first nano-dispersed phase (nm) | 200 | 150 | 190 | 210 | 230 | 350 | 400 | 320 | -- |
| | | Diameter of second nano-dispersed phase (nm) | 180 | 100 | 120 | 140 | 200 | 450 | 550 | 150 | 400 |
| Physical properties | | Tensile strength (MPa) | 61 | 62 | 60 | 65 | 63 | 56 | 51 | 59 | 56 |
| | | Impact strength (J/m) | 210 | 220 | 240 | 230 | 240 | 160 | 190 | 160 | 130 |
| | | Heat distortion temperature (°C) | 194 | 193 | 190 | 192 | 189 | 185 | 183 | 186 | 177 |
| | | Volume resistance (Ω·cm) | $10^4$ | $10^3$ | $10^4$ | $10^4$ | $10^3$ | $10^5$ | $10^5$ | $10^5$ | $10^4$ |
| | | Surface appearance quality | ◎ | ○ | ○ | ◎ | ○ | X | △ | △ | XX |

As can be seen from Table 1, Examples having a dual dispersed phase structure includes a micro-dispersed phase with a diameter of 2 μm or less and a first nano-dispersed phase with a diameter of 300 nm or less, and thus shows improved impact resistance and surface appearance.

Although Comparative Examples 1 to 3 form a micro-dispersed phase and a first nano-dispersed phase, the micro-dispersed phase has a diameter of larger than 2 μm and the first nano-dispersed phase has a diameter of larger than 300 nm. As a result, it can be seen that Comparative Examples 1 to 3 show lower tensile strength, impact strength and heat distortion temperature as compared to Examples 1 to 5, and have increased volume resistance and inferior surface appearance quality.

In the case of Comparative Example 4, no first nano-dispersed phase is formed in the micro-dispersed phase, resulting in a significant decrease in impact resistance, degradation of tensile strength and heat distortion temperature, and inferior surface appearance quality.

## Claims

**1.** A conductive resin composition comprising:

a continuous phase comprising polyamide;
a micro-dispersed phase comprising polyphenylene ether; and
a first nano-dispersed phase positioned in the micro-dispersed phase and comprising a styrene copolymer,
wherein the micro-dispersed phase has a diameter of 2 μm or less and
the first nano-dispersed phase has a diameter of 300 nm or less.

**2.** The conductive resin composition according to claim 1, which further comprises a second nano-dispersed phase separated from the micro-dispersed phase and comprising carbon nanotubes.

3. The conductive resin composition according to claim 2, wherein the second nano-dispersed phase has a diameter of 250 nm or less.

4. The conductive resin composition according to claim 1, wherein the micro-dispersed phase further comprises a modified polyphenylene ether different from the polyphenylene ether, and
the ratio of the weight of the polyphenylene ether and the weight of the modified polyphenylene ether is 95:5 to 60:40.

5. The conductive resin composition according to claim 1, wherein the polyamide has a relative viscosity (RV) of 1 to 5.

6. The conductive resin composition according to claim 2, which further comprises an olefin copolymer.

7. The conductive resin composition according to claim 6, wherein the carbon nanotubes are concentrated in the olefin copolymer.

8. The conductive resin composition according to claim 6, wherein the ratio of the weight of the olefin copolymer and the weight of the carbon nanotubes is 50:50 to 95:5.

9. The conductive resin composition according to claim 1, which further comprises carbon nanotubes, modified polyphenylene ether and an olefin copolymer,

wherein, based on 100 parts by weight of the combined weight of the polyamide, the polyphenylene ether and the modified polyphenylene ether,
the styrene copolymer is comprised in an amount of 5 parts by weight to 12 parts by weight,
the olefin copolymer is comprised in an amount of 2 parts by weight to 6 parts by weight, and
the carbon nanotubes are comprised in an amount of 0.5 parts by weight to 3 parts by weight.

10. A molded article comprising the conductive resin composition as defined in any one of claims 1 to 9.

11. The molded article according to claim 10, which has a heat distortion temperature of 185°C or higher and a volume resistance of less than $10^5$ Ω·cm.

12. A method for preparing a conductive resin composition, comprising the steps of:

preparing a masterbatch comprising carbon nanotubes concentrated in an olefin copolymer;
mixing a mixture of polyamide, polyphenylene ether, a styrene copolymer and the masterbatch; and
melting and kneading the mixture by using a twin screw extruder.

13. The method for preparing a conductive resin composition according to claim 12, wherein the twin screw extruder comprises 8 or more kneading blocks.

【FIG. 1】

Main inlet
Auxiliary inlet 1
Auxiliary inlet 2
Kneading blocks

【FIG. 2】

Continuous phase
First nano-dispersed phase
Micro-dispersed phase
Second nano-dispersed phase
1μm

TRANSLATION

## INTERNATIONAL SEARCH REPORT

International application No.
**PCT/KR2025/010322**

**A. CLASSIFICATION OF SUBJECT MATTER**

**C08L 77/00**(2006.01)i; **C08L 71/12**(2006.01)i; **C08L 53/02**(2006.01)i; **C08L 23/0807**(2025.01)i; **C08K 3/04**(2006.01)i

According to International Patent Classification (IPC) or to both national classification and IPC

**B. FIELDS SEARCHED**

Minimum documentation searched (classification system followed by classification symbols)

C08L 77/00(2006.01); C08J 3/22(2006.01); C08J 5/00(2006.01); C08K 3/013(2018.01); C08K 3/04(2006.01); C08L 23/06(2006.01); C08L 25/04(2006.01); C08L 71/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 폴리아마이드(polyamide), 분산상(dispersion phase), 연속상(continuous phase), 폴리페닐렌 에테르(polyphenylene ether), 스티렌 공중합체(styrene copolymer), 폴리올레핀(polyolefin), 탄소나노튜브(carbon nanotube)

**C. DOCUMENTS CONSIDERED TO BE RELEVANT**

| Category* | Citation of document, with indication, where appropriate, of the relevant passages | Relevant to claim No. |
|---|---|---|
| X | KR 10-2016-0121383 A (LOTTE ADVANCED MATERIALS CO., LTD.) 19 October 2016 (2016-10-19) paragraphs [0033]-[0154]; claims 1-11; tables 1, 2; manufacturing examples 2, 3; examples 2, 3 | 12 |
| Y | | 1-11,13 |
| Y | KR 10-2018-0015501 A (KOREA KUMHO PETROCHEMICAL CO., LTD.) 13 February 2018 (2018-02-13) claim 3 | 1-11 |
| Y | KR 10-2021-0047842 A (LG CHEM, LTD.) 30 April 2021 (2021-04-30) claim 14 | 13 |
| A | KR 10-2015-0078241 A (CHEIL INDUSTRIES INC.) 08 July 2015 (2015-07-08) claims 1-9 | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 October 2025** | **30 October 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

INTERNATIONAL SEARCH REPORT

International application No.
**PCT/KR2025/010322**

**C. DOCUMENTS CONSIDERED TO BE RELEVANT**

| Category* | Citation of document, with indication, where appropriate, of the relevant passages | Relevant to claim No. |
| --- | --- | --- |
| A | US 2012-0214932 A1 (HUH, J.-Y. et al.) 23 August 2012 (2012-08-23)<br>claims 1-7 | 1-13 |

Form PCT/ISA/210 (second sheet) (July 2022)

TRANSLATION

## INTERNATIONAL SEARCH REPORT
**Information on patent family members**

International application No. **PCT/KR2025/010322**

| Patent document cited in search report | Publication date (day/month/year) | Patent family member(s) | Publication date (day/month/year) |
|---|---|---|---|
| KR 10-2016-0121383 A | 19 October 2016 | EP 3078712 A1 | 12 October 2016 |
| | | US 10056168 B2 | 21 August 2018 |
| | | US 2016-0300639 A1 | 13 October 2016 |
| KR 10-2018-0015501 A | 13 February 2018 | None | |
| KR 10-2021-0047842 A | 30 April 2021 | CN 111670220 A | 15 September 2020 |
| | | CN 111670220 B | 10 March 2023 |
| | | EP 3693412 A1 | 12 August 2020 |
| | | EP 3693412 B1 | 25 October 2023 |
| | | JP 07-055871 B2 | 18 April 2022 |
| | | JP 2021-509124 A | 18 March 2021 |
| | | KR 10-2020-0053701 A | 19 May 2020 |
| | | KR 10-2247186 B1 | 04 May 2021 |
| | | KR 10-2326203 B1 | 15 November 2021 |
| | | US 11912868 B2 | 27 February 2024 |
| | | US 2020-0332119 A1 | 22 October 2020 |
| | | WO 2020-096400 A1 | 14 May 2020 |
| KR 10-2015-0078241 A | 08 July 2015 | US 2015-0187457 A1 | 02 July 2015 |
| US 2012-0214932 A1 | 23 August 2012 | EP 2497801 A1 | 12 September 2012 |
| | | EP 2497801 B1 | 19 November 2014 |
| | | KR 10-1266300 B1 | 22 May 2013 |
| | | KR 10-2011-0048376 A | 11 May 2011 |
| | | US 9062191 B2 | 23 June 2015 |
| | | WO 2011-052848 A1 | 05 May 2011 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240169426